# EUROPEAN PATENT APPLICATION

(11) **EP 3 640 581 A1**
(43) Date of publication of application: **22.04.2020**
(21) Application number: 18842386.7
(22) Date of filing: 30.07.2018
(51) Int. Cl.: G01B 11/00, G01B 11/26

(54) **MARKER UNIT**

(30) Priority: 31.07.2017 JP 2017148306
(71) Applicant: Enplas Corporation, Kawaguchi-shi, Saitama 332-0034 (JP)
(72) Inventor: SAITO Tomohiro, Kawaguchi-shi Saitama 332-0034 (JP); FUKUDA Yasuyuki, Kawaguchi-shi Saitama 332-0034 (JP)
(74) Representative: J A Kemp LLP
(86) International application number: PCT/JP2018/028368
(87) International publication number: WO 2019/026817

(57) **Abstract**

The present invention provides a marker unit that can be easily installed in the same target object under the same installation condition, for example. The marker unit of the present invention includes: an upper substrate; and a lower substrate, wherein the upper substrate is laminated on the lower substrate to form a laminate. The lower substrate has a lower substrate detection target portion exposed to an upper surface side of the laminate on an upper surface thereof, and the lower substrate has at least two positioning portions on a lower surface thereof. The detection target portion is detectable from an upper surface side of the laminate, and each positioning portion is visually recognizable from a side surface direction of the laminate and is visually unrecognizable from the upper surface direction of the laminate. When the laminate is installed in an installation target object, each positioning portion is disposed on the lower substrate at a position corresponding to an alignment mark with the marker unit in the installation target object by recognizing from the side surface direction of the laminate.

## Description

### TECHNICAL FIELD

The present invention relates to a marker unit.

### BACKGROUND ART

In the fields of augmented reality (also referred to as "AR" hereinafter), robotics, etc., a so-called visual marker is used to recognize the position, the orientation, and the like of an object. As the marker, for example, an AR marker is commonly used. As another example of the marker, for example, a marker that includes a lenticular lens arranged on a black stripe pattern has been reported (Patent Literature 1). The marker is commonly referred to as a variable moire pattern (VMP) marker that is displaced depending on the viewing angle and is also referred to as a rotation angle scale (RAS) marker. When an image appearing on the marker is detected by a detection device such as a camera, the color gradation pattern of the image changes depending on the viewing angle of the camera with respect to the marker. Thus, the rotation angle of the marker can be determined by detecting the color gradation pattern of the marker.

The visual marker is usually disposed on a substrate. On the substrate, a plurality of detection reference portions serving as marks of regions to be detected by the camera are provided, and such a substrate with the detection reference portions as a whole is used as a marker unit. The marker unit is fixed to a desired position of the installation target object with, for example, a double-sided tape or the like.

### Citation List

### Patent Literature

Patent Literature 1: JP 2012-145559 A

### SUMMARY OF INVENTION

### Technical Problem

However, the marker and the detection reference portion in the marker unit differ in appearance depending on positions and angles. Therefore, when there is a need to install the marker unit in the installation target object, remove the marker unit from the target object, and replace the marker unit with the same type of marker unit, the installation accuracy of the marker unit is important every time the measurement is performed. That is, even if the marker unit is the same or replaced with the same type of marker unit, if the installation in the target object differs each time, the result obtained from the marker unit may differ even if the measurement is performed under the same condition. Then, every time the marker unit is installed, calibration or the like is required so that the measurement result of the marker unit installed previous time and the measurement result of the marker unit installed thereafter can correspond to each other, which takes time and labor. Therefore, it is important to accurately dispose the marker unit at a desired position of the installation target object.

Therefore, when the marker unit is installed in the installation target object, usually, an alignment mark for the marker unit is provided on the installation target object in advance, and the marker unit is aligned in accordance with the alignment mark. As the alignment mark, for example, a cross-shaped reference line on the surface of the installation target object is generally used. As described above, when the marker unit is fixed with the double-sided tape, for example, the following method is adopted. First, prepared is a marker unit in which a double-sided tape and release paper are provided in this order on the back surface thereof. The release paper is divided into two along a cross passing through the center of the marker unit. Then, one of the two pieces of release paper is peeled off from the marker unit to expose a half of the double-sided tape on the back surface. Next, by aligning the side of the other of the two pieces of release paper remaining on the marker unit, which passes through the center of the marker unit, and one of the lines of the cross (reference line), a half region of the marker unit is fixed to the installation target object with the exposed double-sided tape. Then, the other of the two pieces of release paper is peeled off, and the remaining region of the marker unit is fixed to the installation target object. However, such a method of dividing the region of the marker to align requires time and labor, and it is difficult to ensure the installation accuracy. In addition, this method is difficult to use for markers whose region cannot be divided.

With the foregoing in mind, it is an object of the present invention to provide a marker unit that can be easily installed in the same target object under the same installation condition, for example.

### Solution to Problem

In order to achieve the above object, the present invention provides a marker unit including: an upper substrate; and a lower substrate, wherein the upper substrate is laminated on the lower substrate to form a laminate, the lower substrate has a lower substrate detection target portion exposed to an upper surface side of the laminate on an upper surface thereof, the lower substrate has at least two positioning portions on a lower surface thereof, the lower substrate detection target portion is detectable from an upper surface side of the laminate, and each positioning portion is visually recognizable from a side surface direction of the laminate and is visually unrecognizable from the upper surface direction of the laminate.

### Advantageous Effects of Invention

Since the marker unit of the present invention has the positioning portion as described above, the marker unit can be easily positioned and installed in an installation target object such as a robot by visual recognition from the side. In addition, since the positioning portion is visually unrecognizable from the upper surface direction of the laminate, for example, the positioning portion can be prevented from causing noise when detecting the lower substrate detection target portion, and as a result, the detection accuracy can be prevented from being lowered. Therefore, according to the marker unit of the present invention, for example, calibration for the measurement of the detection reference portion, the marker, or the like in the marker unit can be omitted every time a marker unit is installed in the installation target object.

### BRIEF DESCRIPTION OF DRAWINGS

[FIGs. 1A to 1C] FIG. 1A is a plan view of a marker unit according to the present invention, FIG. 1B is a cross-sectional view of the marker unit, and FIG. 1C is a plan view of an upper substrate of the marker unit.
[FIG. 2] In FIG. 2, the left drawing is a side view showing an exemplary marker unit according to the present invention, the middle drawing is a plan view of the marker unit viewed from below, and the upper right drawing is a cross-sectional view of the marker unit.

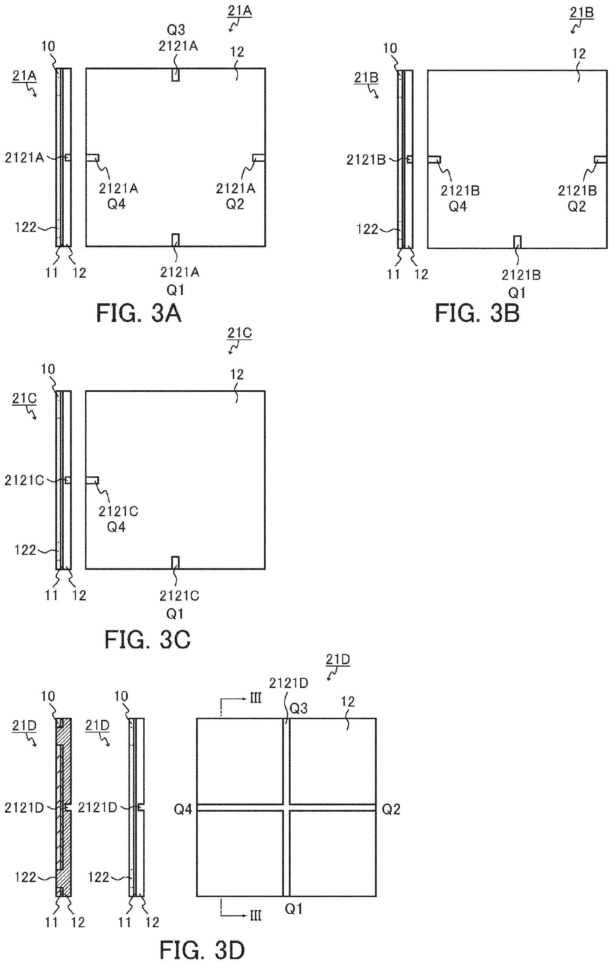

[FIGs. 3A to 3D] In FIG. 3A, the left drawing is a side view showing an exemplary marker unit according to the present invention and the right drawing is a plan view of the marker unit viewed from below. In FIG. 3B, the left drawing is a side view showing an exemplary marker unit according to the present invention and the right drawing is a plan view viewed from below. In FIG. 3C, the left drawing is a side view showing an exemplary marker unit according to the present invention and the right drawing is a plan view of the marker unit viewed from below. In FIG. 3D, the left drawing is a cross-sectional view of an exemplary marker unit according to the present invention, the middle drawing is a side view of the marker unit, and the right drawing is a plan view of the marker unit viewed from below.
[FIG. 4] In FIG. 4, the left drawing is a cross-sectional view showing an exemplary marker unit according to the present invention, the middle drawing is a side view of the marker unit, and the right drawing is a plan view of the marker unit viewed from below.
[FIG. 5] In FIG. 5, the left drawing is a cross-sectional view showing an exemplary marker unit according to the present invention, the middle drawing is a side view of the marker unit, and the right drawing is a plan view of the marker unit viewed from below.
[FIG. 6] In FIG. 6, the left drawing is a cross-sectional view showing an exemplary marker unit according to the present invention, the middle drawing is a side view of the marker unit, and the right drawing is a plan view of the marker unit viewed from below.
[FIG. 7] In FIG. 7, the left drawing is a cross-sectional view showing an exemplary marker unit according to the present invention, the middle drawing is a side view of the marker unit, and the right drawing is a plan view of the marker unit viewed from below.
[FIGs. 8A to 8C] FIG. 8A is a plan view of a marker unit according to the present invention, FIG. 8B is a cross-sectional view of the marker unit, and FIG. 8C is a plan view of an upper substrate of the marker unit.

### DESCRIPTION OF EMBODIMENTS

In the marker unit of the present invention, for example, the lower substrate detection target portion includes at least one of a marker or a detection reference portion serving as a reference in detecting the marker.

In the marker unit of the present invention, for example, the upper substrate has an upper substrate detection target portion detectable from the upper surface side of the laminate, and the upper substrate detection target portion serves as a marker.

In the marker unit of the present invention, for example, the lower substrate has a protrusion protruding downward, and the protrusion serves as the positioning portion.

In the marker unit of the present invention, for example, the lower substrate has a protrusion protruding downward, a part of the protrusion is chipped to form a notch, and the notch serves as the positioning portion.

In the marker unit of the present invention, for example, the lower substrate has a notch on a side surface thereof, and the notch serves as the positioning portion.

In the marker unit of the present invention, for example, the positioning portion of the lower substrate includes at least two positioning portions in a positional relationship of not facing each other.

In the marker unit of the present invention, for example, the lower substrate has at least three positioning portions.

In the marker unit of the present invention, for example, when the laminate is installed in an installation target object, each positioning portion is disposed on the lower substrate at a position corresponding to an alignment mark with the marker unit in the installation target object by visual recognition from the side surface direction of the laminate, and the alignment mark with the marker unit in the installation target object is a mark of two lines intersecting each other.

In the marker unit of the present invention, for example, the two lines intersecting each other form a cross consisting of two lines orthogonal to each other.

In the marker unit of the present invention, for example, assuming two lines intersecting each other with a central axis of the laminate as an intersection, the lower substrate has the positioning portions at least at two of four points where edge regions of lower substrate and the two lines intersect.

In the marker unit of the present invention, for example, the upper substrate has a through hole, and the lower substrate has the detection reference portion on the upper surface thereof at a position corresponding to the through hole of the upper substrate.

In the marker unit of the present invention, for example, the lower substrate has a protrusion on the upper surface thereof at a position corresponding to the through hole of the upper substrate, and an upper surface of the protrusion serves as the detection reference portion.

In the marker unit of the present invention, for convenience, the viewing side is referred to as "upward" or "above" and the opposite side is referred to as "downward" or "below". Therefore, in the marker unit of the present invention, for example, the "upper substrate" is a substrate on the viewing side, and the "lower substrate" is a substrate positioned below the upper substrate.

The installation target object in which the marker unit of the present invention is to be installed is not particularly limited, and examples thereof include robots, construction equipment, clothing, and mounts attached thereto.

In the present invention, the positioning portion is only required to be visually recognizable from the side surface direction of the laminate and visually unrecognizable from the upper surface direction of the laminate, and the position is not particularly limited. For example, the position, the shape, and the like may be appropriately determined in accordance with the alignment mark with the marker unit in the installation target object. The alignment mark with the installation target object is not particularly limited, and, for example, is a mark of two lines intersecting each other, and a specific example is a cross-shaped mark consisting of two lines orthogonal to each other. The positioning portion is only required to be visually unrecognizable from the upper surface direction of the laminate, and the "upper surface direction" indicates a direction from above the upper substrate of the laminate toward the upper substrate. The upper surface direction may be, for example, a direction of the central axis of the upper substrate of the laminate or a direction parallel to the central axis, or may be an optical axis direction with respect to the marker unit.

The marker unit is characterized in that the positioning portion is provided so as to satisfy the condition as described above, and the other configuration and the like are not limited in any way. Specifically, in the marker unit, the detection target portion, the type of the marker included in the detection target portion, the type and the lamination form of various substrates, and the like are not limited, for example.

Embodiments of the present invention are described below with reference to the drawings. The present invention is in no way limited or restricted by the following embodiments. In the drawings, identical parts are indicated with identical reference signs. Furthermore, for convenience in explanation, the structure of each component may be appropriately simplified, and the size, the ratio, and the like of components are not limited to the conditions shown in the drawings. Hereinafter, in the laminate including the lower substrate and the upper substrate, the lower substrate side is referred to as "downward" or "below", and the upper substrate side is referred to as "upward" or "above".

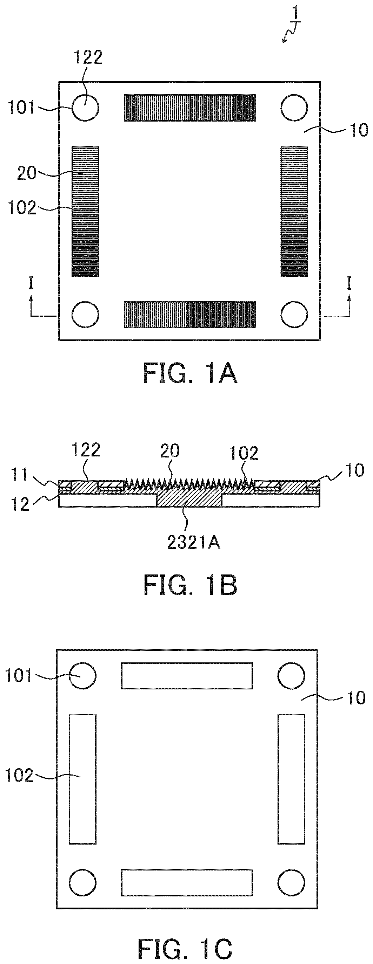

First, an exemplary basic configuration of the marker unit according to the following embodiments is shown in FIGs. 1A to 1C. FIG. 1A is a plan view of a marker unit 1 viewed from the upper surface side, FIG. 1B is a cross-sectional view take along the line I-I of the marker unit 1, and FIG. 1C is a plan view of an upper substrate 10 of the marker unit 1. The marker unit 1 includes a lower substrate 12, an interposed substrate 11, and an upper substrate 10, and is a laminate in which the upper substrate 10 is disposed on the lower substrate 12 via the interposed substrate 11.

The marker unit 1 includes detection reference portions 122 and markers 20 such as variable moire patterns (VMP) disposed between the detection reference portions 122 as detection target portions detectable from the upper surface side of the laminate. The detection reference portions 122 and the markers 20 are the lower substrate detection target portions formed by the lower substrate 12. The lower substrate detection target portion is an upper surface side region of the lower substrate 12 of the marker unit 1, and the lower substrate detection target portion on the upper surface of the lower substrate 12 is exposed to the upper surface side of the marker unit 1. In the marker unit 1, the upper substrate 10 and the interposed substrate 11 have through holes 101 and 102 at positions corresponding to the detection reference portions 122 and the markers 20. When the interposed substrate 11 and the upper substrate 10 are laminated on the lower substrate 12, the upper surface of the lower substrate 12 is exposed in regions corresponding to the through holes 101 and 102 of the upper substrate 10, thereby forming the detection reference portions 122 and the markers 20. The lower substrate 12 has, for example, circular protrusions protruding upward at positions to be the detection reference portions 122, and in the marker unit 1, the upper surface of each of the protrusions serves as the detection reference portion 122. The lower substrate 12 has, for example, continuous peak-shaped protrusions at positions to be the markers 20, and in the marker unit 1, each continuous protrusion serves as the marker 20.

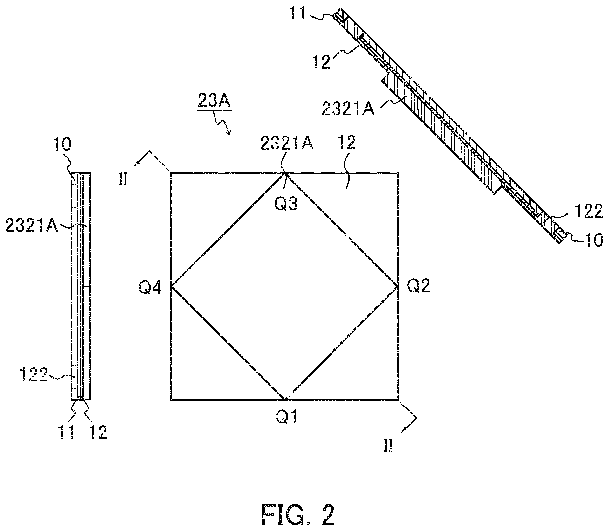

In the following embodiments, the positioning portion in the lower substrate is described in detail predicated on this basic structure of the marker unit 1. In FIGs. 1A to 1C, similarly to FIG. 2 described below, a square positioning portion 2321A protruding downward is shown as a positioning portion in the lower substrate 12. The marker unit of the present invention, however, is not limited thereto.

The basic structure of the marker unit of the present invention is not limited to the example shown in FIGs. 1A to 1C. For example, the marker unit may or may not include the interposed substrate 11, the marker unit may include only the marker 20 or the detection reference portion 122 as the lower substrate detection target portion, and the shapes and the like of the marker 20 and the detection reference portion 122 are not limited to these examples. The marker unit of the present invention may further include a marker as the upper substrate detection target portion, for example. It is to be noted that the marker 20 is not shown in the drawings of the following embodiments.

### [First embodiment]

FIG. 2 shows an exemplary marker unit of the present embodiment. In a marker unit 23A of the present embodiment, a lower substrate 12 has a protrusion-like positioning portion protruding downward on the lower surface thereof.

In FIG. 2, the middle drawing is a plan view of the marker unit 23A as viewed from the lower substrate 12 side, the upper right drawing is a cross-sectional view of the marker unit 23A taken along the line II-II, and the left drawing is a side view of the marker unit 23A. As shown in FIG. 2, the marker unit 23A includes the lower substrate 12, an interposed substrate 11, and an upper substrate 10, and the upper substrate 10 is disposed on the lower substrate 12 via the interposed substrate 11. The marker unit 23A has detection reference portions 122 and markers detectable from the upper surface side, and each marker is disposed between the detection reference portions 122 (see FIGs. 1A to 1C). The lower substrate 12 in the marker unit 23A has columnar protrusions (hereinafter, also referred to as upper surface side protrusions) protruding upward on the upper surface thereof. The upper surface of each upper surface side protrusion serves as a detection reference portion 122, and the interposed substrate 11 and the upper substrate 10 each have through holes at positions corresponding to the detection reference portions 122. Each upper surface side protrusion of the lower substrate 12 is inserted into each through hole of the interposed substrate 11 and the upper substrate 10, and the upper surface of each upper surface side protrusion of the lower substrate 12 serving as the detection reference portion 122 is exposed upward. The lower substrate 12 has a prismatic protrusion 2321A protruding downward on the lower surface thereof. The protrusion 2321A on the lower surface side is quadrilateral (square) in plan view, and each of the four corners is located at the center of each of the four sides on the lower surface of the lower substrate 12. When the marker unit 23A is viewed from four side surface directions, the corners of the protrusion 2321A on the lower surface side are visually recognizable, and the corners serve as positioning portions Q1, Q2, Q3, and Q4, respectively. The lower substrate 12 having the protrusion on the upper surface side and the protrusion 2321A on the lower surface side is, for example, an integrally molded body.

For example, when the marker unit of the present invention is disposed on a flat surface of an installation target object, it is preferable that the back surface of the marker unit, that is, the back surface of the lower substrate, be flat so that it is easy to be disposed on the flat surface. As a specific example, it is preferable that a region of 50% or more of the entire back surface of the lower substrate be flat, for example. In the marker unit 23A of the present embodiment, the back surface of the lower substrate 12 has a quadrilateral protrusion 2321A, and the surface of the protrusion 2321A is flat and occupies 50% of the entire back surface of the lower substrate 12. Therefore, the marker unit 23A of the present embodiment can be easily installed on the flat surface of the installation target object in a stable manner, for example.

The marker unit of the present embodiment may include, for example, an assisting member for forming a surface that is flat with respect to the surface of the protrusion 2321A in a region where the protrusion 2321A is chipped (a region where the protrusion 2321A is not formed) on the back surface of the lower substrate 12. By flattening the surface of the assisting member and the surface of the protrusion 2321A, for example, the entire back surface of the marker unit can be flattened. The assisting member is not particularly limited, and for example, a member that is distinguishable from the lower substrate 12 is preferable because the protrusion 2321A functions as a positioning portion. Regarding the expression, "distinguishable from the lower substrate 12", for example, the assisting member is preferably different in color from the lower substrate 12, and specifically, the assisting member is in a color that easily provides the contrast to the lower substrate 12. In the marker unit of the present invention, the position where the protrusion 2321A of the lower substrate 12 is formed and the position where the assisting member is disposed may be reversed. That is, with reference to the marker unit 23A shown in FIG. 2, the protrusion protruding downward from the lower substrate 12 may be formed at a position where the protrusion 2321A is not formed, and the assisting member may be disposed at a position where the protrusion 2321A is formed. Also in this case, when the marker unit of the present invention is viewed from the side, the boundary between the protrusion and the assisting member can be recognized as a positioning portion. The same applies to other embodiments.

The marker unit 23A can be installed, for example, in an installation target object having a cross-shaped mark as the alignment mark. In this case, first, the marker unit 23A is brought closer to the alignment mark of the installation target object. Then, while visually recognizing the marker unit 23A from the side, one of the lines of the cross of the installation target object is aligned with the positioning portions Q1 and Q3, and then the other of the lines of the cross of the installation target object is aligned with the positioning portions Q2 and Q4. Thereby, the marker unit 23A can be installed at a predetermined position of the installation target object. In the marker unit 23A, since none of the positioning portions Q1 to Q4 is visually recognizable from the upper surface direction, the positioning portions Q1 to Q4 can be prevented from causing noise in detecting the detection reference portion 122 and the marker.

While four positioning portions are visually recognizable from the sides in the present embodiment, for example, any three or two of the positioning portions of the protrusion 2321A of the lower substrate 12 may be visually recognizable from the sides. In the case where two of the positioning portions are visually recognizable from the sides, the two positioning portions are preferably in a positional relationship of not facing each other, for example. In the case of the marker unit 23A, for example, the above-described positional relationship is applied to the relationship between Q1 and Q2 or Q4, and the relationship between Q3 and Q2 or Q4.

In the marker unit 23A of the present embodiment, the positioning portion is provided on the lower substrate 12 to which the lower substrate detection target portion, which is the detection target from the outside, is provided. Since both of the positioning portion and the lower substrate detection target portion are provided on the same lower substrate 12 as described above, the lower substrate detection target portion, which influences the measurement result due to a positional deviation, can be more accurately disposed by the positioning portion, for example.

### [Second embodiment]

FIGs. 3A to 3D each shows an exemplary marker unit of the present embodiment. In each of the marker units (21A, 21B, 21C, and 21D) of the present embodiment, the lower substrate 12 has notches on the side surfaces thereof, and the notches serve as positioning portions.

In the present embodiment, regarding the number of the positioning portions, while the aspects of two, three, and four will be described below, for example, the number of the positioning portions may be two or more, three or more, or four or more, and the upper limit thereof is not particularly limited.

First, the marker unit 21A of FIG. 3A is described. In FIG. 3A, the right drawing is a plan view of the marker unit 21A as viewed from the lower substrate 12 side, and the left drawing is a side view of the marker unit 21A. As shown in FIG. 3A, in the marker unit 21A, the lower substrate 12 has notches 2121A on four side surfaces thereof. When the marker unit 21A is viewed from the four side surface directions, the notches 2121A on the side surfaces serve as four positioning portions (Q1 to Q4), respectively.

The marker unit 21A is the same as the marker unit of the first embodiment except that the shapes of the positioning portions Q1 to Q4 are different, and can be installed, for example, in an installation target object having a cross-shaped mark as the alignment mark. That is, first, the marker unit 21A is brought closer to the alignment mark of the installation target object. Then, while visually recognizing the marker unit 21A from the side, one of the lines of the cross of the installation target object is aligned with the positioning portions Q1 and Q3, and then the other of the lines of the cross of the installation target object is aligned with the positioning portions Q2 and Q4. Thereby, the marker unit 21A can be installed at a predetermined position of the installation target object. In the marker unit 21A, since none of the positioning portions Q1 to Q4 are visually recognizable from the upper surface direction, the positioning portions Q1 to Q4 can be prevented from causing noises in detecting the detection reference portion 122 and the marker.

Next, the marker unit 21B of FIG. 3B is described. In FIG. 3B, the right drawing is a plan view of the marker unit 21B as viewed from the lower substrate 12 side, and the left drawing is a side view of the marker unit 21B. The marker unit 21B is the same as the marker unit 21A of FIG. 3A except that the number of the notches is three and the marker unit 21B has three positioning portions (Q1, Q2, and Q4).

The marker unit 21B can be installed, for example, in an installation target object having a cross-shaped mark as the alignment mark. In this case, first, the marker unit 21B is brought closer to the alignment mark of the installation target object. Then, while visually recognizing the marker unit 21B from the side, one of the lines of the cross of the installation target object is aligned with the positioning portions Q2 and Q4, and then the other of the lines of the cross of the installation target object is aligned with the positioning portion Q1. Thereby, the marker unit 21B can be installed at a predetermined position of the installation target object.

Next, the marker unit 21C of FIG. 3C is described. In FIG. 3C, the right drawing is a plan view of the marker unit 21C as viewed from the lower substrate 12 side, and the left drawing is a side view of the marker unit 21C. The marker unit 21C is the same as the marker unit 21A of FIG. 3A except that the number of the notches is two and the marker unit 21C has two positioning portions (Q1 and Q4).

The marker unit 21C can be installed, for example, in an installation target object having a cross-shaped mark as the alignment mark. In this case, first, the marker unit 21C is brought closer to the alignment mark of the installation target object. Then, while visually recognizing the marker unit 21C from the side, one of the lines of the cross of the installation target object is aligned with the positioning portion Q1, and then the other of the lines of the cross of the installation target object is aligned with the positioning portion Q4. Thereby, the marker unit 21C can be installed at a predetermined position of the installation target object. In the case where the marker unit of the present invention has two positioning portions, it is preferable that the two positioning portions not face each other as in the marker unit 21C of the present embodiment. Also, in the case where the marker unit of the present invention has two or more positioning portions, it is preferable that at least two positioning portions be in a positional relationship of not facing each other.

Next, the marker unit 21D of FIG. 3D is described. In FIG. 3D, the right drawing is a plan view of the marker unit 21D as viewed from the lower substrate 12 side, the middle drawing is a side view of the marker unit 21D, and the left drawing is a cross-sectional view taken along the line III-III. As shown in FIG. 3D, in the marker unit 21D, the lower substrate 12 has a cross-shaped recess 2121D in which two recessed lines intersect with each other on the lower surface thereof. Both ends of each of the recessed lines are each located at the center of each of the four sides on the lower surface of the lower substrate 12. When the marker unit 21D is viewed from the four side surface directions, the ends of the recess 2121D are visually recognizable, so that the four ends of the recess 2121D serve as four positioning portions (Q1 to Q4).

The marker unit 21D can be installed, for example, in an installation target object having a cross-shaped mark as the alignment mark, and is the same as the marker unit 21A of FIG. 3A.

### [Third embodiment]

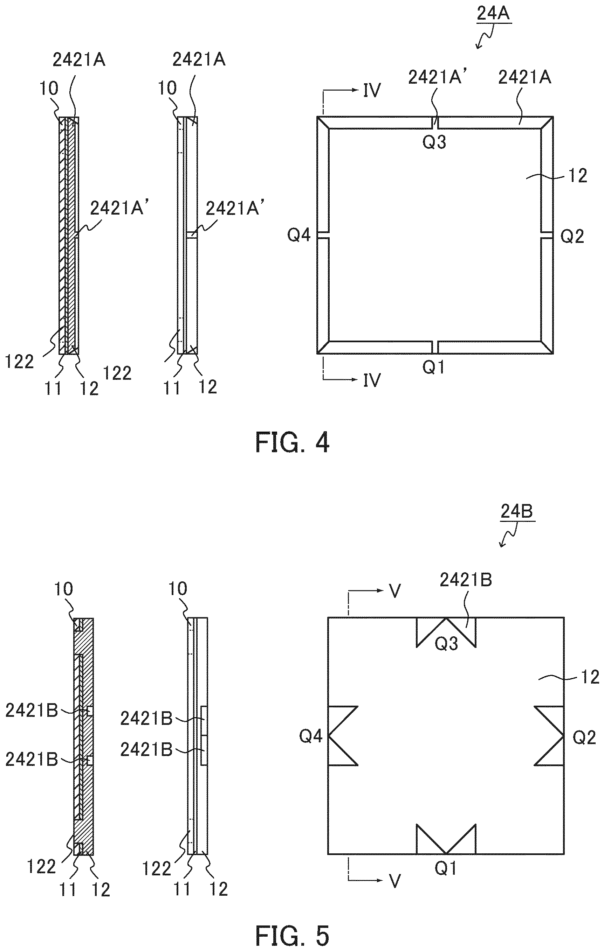

FIG. 4 shows an exemplary marker unit of the present embodiment. In the marker unit 24A of the present embodiment, the lower substrate 12 has a notch and a non-notch on the side surface thereof, and the non-notch serves as a positioning portion.

The marker unit 24A of FIG. 4 is described. In FIG. 4, the right drawing is a plan view of the marker unit 24A as viewed from the lower substrate 12 side, the middle drawing is a side view of the marker unit 24A, and the left drawing is a cross-sectional view of the marker unit 24A taken along the line IV-IV. As shown in FIG. 4, in the marker unit 24A, four side surfaces of the lower substrate 12 are tapered side surface regions narrowing in the downward direction except for the centers of the four side surfaces, and the centers are side surface regions extending vertically in the downward direction. In each of the four side surfaces, the tapered region is a notch 2421A, and the vertically extending region is a non-notch 2421A'. When the marker unit 24A is viewed from the four side surface directions, the non-notches 2421 A' on the side surfaces serve as four positioning portions (Q1 to Q4), respectively.

The marker unit 24A is the same as the marker unit of the first embodiment except that the shapes of the positioning portions Q1 to Q4 are different, and can be installed, for example, in an installation target object having a cross-shaped mark as the alignment mark. That is, first, the marker unit 24A is brought closer to the alignment mark of the installation target object. Then, while visually recognizing the marker unit 24A from the side, one of the lines of the cross of the installation target object is aligned with the positioning portions Q1 and Q3, and then the other of the lines of the cross of the installation target object is aligned with the positioning portions Q2 and Q4. Thereby, the marker unit 24A can be installed at a predetermined position of the installation target object.

### [Fourth embodiment]

FIG. 5 shows an exemplary marker unit of the present embodiment. In the marker unit 24B of the present embodiment, the lower substrate 12 has notches on the side surfaces thereof, and the notches serve as positioning portions as in the second embodiment.

The marker unit 24B of FIG. 5 is described. In FIG. 5, the right drawing is a plan view of the marker unit 24B as viewed from the lower substrate 12 side, the middle drawing is a side view of the marker unit 24B, and the left drawing is a cross-sectional view of the marker unit 24B taken along the line V-V. As shown in FIG. 5, in the marker unit 24B, the lower substrate 12 has four notches 2421B on the side surfaces thereof. Each of the four notches 2421B is a pair of symmetrical triangular prisms, and is located at the center of each of the four sides on the lower surface of the lower substrate 12. When the marker unit 24B is viewed from the four side surface directions, since the boundary between the pair of triangular prisms is visually recognizable in each of the notches 2421B, the boundaries in the notches 2421B serve as four positioning portions (Q1 to Q4), respectively.

The marker unit 24B is the same as the marker unit of the first embodiment except that the shapes of the positioning portions are different, and can be installed, for example, in an installation target object having a cross-shaped mark as the alignment mark. That is, first, the marker unit 24B is brought closer to the alignment mark of the installation target object. Then, while visually recognizing the marker unit 24B from the side, one of the lines of the cross of the installation target object is aligned with the positioning portions Q1 and Q3, and then the other of the lines of the cross of the installation target object is aligned with the positioning portions Q2 and Q4. Thereby, the marker unit 24B can be installed at a predetermined position of the installation target object.

### [Fifth embodiment]

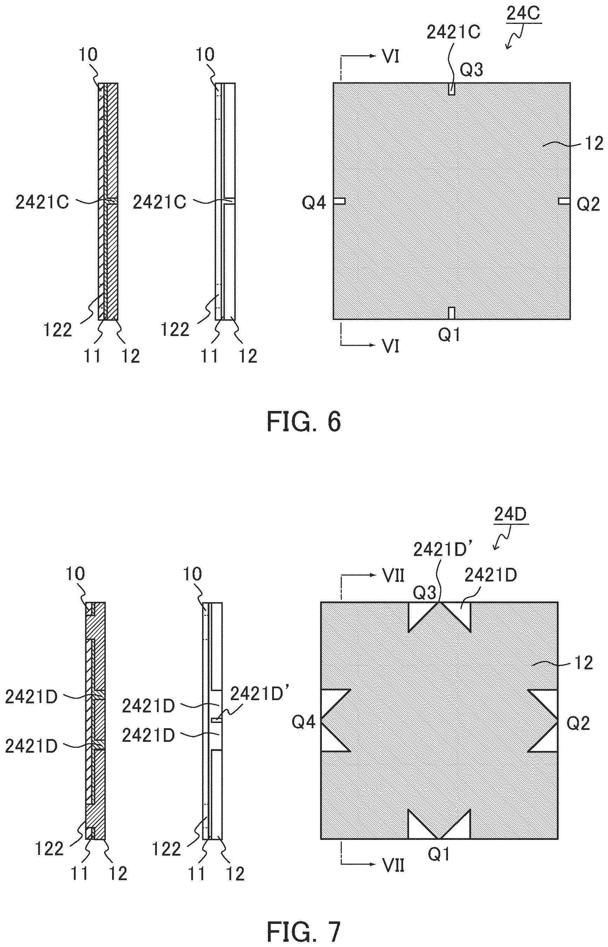

FIG. 6 shows an exemplary marker unit of the present embodiment. In the marker unit 24C of the present embodiment, the lower substrate 12 has notches on the side surfaces thereof, and members different from the lower substrate 12 are inserted into the notches to form positioning portions.

The marker unit 24C of FIG. 6 is described. In FIG. 6, the right drawing is a plan view of the marker unit 24C as viewed from the lower substrate 12 side, the middle drawing is a side view of the marker unit 24C, and the left drawing is a cross-sectional view of the marker unit 24C taken along the line VI-VI. As shown in FIG. 6, in the marker unit 24C, similarly to the marker unit 21A shown in FIG. 3A of the second embodiment, the lower substrate 12 has notches on its four sides. On the other hand, the interposed substrate 11 of the marker unit 24C has protrusions 2421C protruding downward at positions corresponding to the four notches of the lower substrate 12, and these four protrusions 2421C are inserted into the four notches of the lower substrate 12. When the marker unit 24C is viewed from the four side surface directions, the protrusions 2421C inserted into the notches at the side surfaces of the lower substrate 12 serve as four positioning portions (Q1 to Q4), respectively.

While the present embodiment shows an example in which the interposed substrate 11 has the protrusions 2421C, which are inserted into the notches of the lower substrate 12 to serve as the positioning portions, the positioning portion may be formed by, for example, the upper substrate 10. In this case, the interposed substrate 11 has notches at positions corresponding to the notches of the lower substrate 12, and the upper substrate 10 has protrusions projecting downward at positions corresponding to the both notches of the lower substrate 12 and the interposed substrate 11. Then, the protrusions of the upper substrate 10 are inserted into the notches of the interposed substrate 11 and the lower substrate 12, so that the protrusions serve as the positioning portions. The present invention is not limited thereto, and for example, separate members that are distinguishable from the lower substrate 12 may be inserted into the notches of the lower substrate 12. Regarding the expression, "distinguishable from the lower substrate 12", for example, the members are preferably different in color from the lower substrate 12, and specifically, the members are in a color that easily provides the contrast to the lower substrate 12. The same applies to other embodiments.

The marker unit 24C is the same as the marker unit of the first embodiment except that the shapes of the positioning portions Q1 to Q4 are different, and can be installed, for example, in an installation target object having a cross-shaped mark as the alignment mark. That is, first, the marker unit 24C is brought closer to the alignment mark of the installation target object. Then, while visually recognizing the marker unit 24C from the side, one of the lines of the cross of the installation target object is aligned with the positioning portions Q1 and Q3, and then the other of the lines of the cross of the installation target object is aligned with the positioning portions Q2 and Q4. Thereby, the marker unit 24C can be installed at a predetermined position of the installation target object.

### [Sixth embodiment]

FIG. 7 shows an exemplary marker unit of the present embodiment. In the marker unit 24D of the present embodiment, the lower substrate 12 has a pair of notches at a predetermined distance on each of the side surfaces thereof, members different from the lower substrate 12 are inserted into the notches, and each region between the pair of notches serves as a positioning portion.

The marker unit 24D of FIG. 7 is described. In FIG. 7, the right drawing is a plan view of the marker unit 24D as viewed from the lower substrate 12 side, the middle drawing is a side view of the marker unit 24D, and the left drawing is a cross-sectional view of the marker unit 24C taken along the line VII-VII. As shown in FIG. 7, in the marker unit 24D, the lower substrate 12 has four notches on the side surfaces thereof. Each of the four notches is in the shape of a pair of symmetrical triangular prisms, and a predetermined distance is provided between the pair of triangular prisms. On the other hand, the interposed substrate 11 of the marker unit 24D has protrusions 2421D protruding downward at positions corresponding to the four notches of the lower substrate 12. The protrusion 2421D is a symmetrical triangular prism, and these four protrusions 2421D are inserted into the four notches of the lower substrate 12. When the marker unit 24D is viewed from four side surface directions, the side surface of the lower substrate 12 is exposed between the pair of protrusions 2421D inserted into each of the notches at the side surfaces of the lower substrate 12, so that the exposed portions 2421 A' on the four sides serve as four positioning portions (Q1 to Q4).

The marker unit 24D is the same as the marker unit of the first embodiment except that the shapes of the positioning portions are different, and can be installed, for example, in an installation target object having a cross-shaped mark as the alignment mark. That is, first, the marker unit 24D is brought closer to the alignment mark of the installation target object. Then, while visually recognizing the marker unit 24D from the side, one of the lines of the cross of the installation target object is aligned with the positioning portions Q1 and Q3, and then the other of the lines of the cross of the installation target object is aligned with the positioning portions Q2 and Q4. Thereby, the marker unit 24D can be installed at a predetermined position of the installation target object.

The marker unit of the present invention is not limited to the above-described embodiments. As variations of the present invention, configurations other than the above-described positioning portions in the lower substrate are described as examples. The present invention, however, is not limited to these examples.

### [Variation 1]

In the marker unit of the present invention, the lower substrate detection target portion includes the detection reference portion and the marker as described above. The detection reference portion serves as a mark of a region to be detected when the marker is detected by a detection device such as a camera, for example. In the marker unit of the present invention, the number and position of the detection reference portions are not particularly limited. Each of the drawings of the embodiments shows an example in which the marker unit has four detection reference portions positioned in the vicinity of four corners, respectively.

The marker unit of the present invention may further include, for example, the upper substrate detection target portion in addition to the lower substrate detection target portion. While the lower substrate detection target portion is a detection target portion formed by the upper surface of the lower substrate and exposed to the upper surface side of the laminate, the upper substrate detection target portion is a detection target portion formed by the upper substrate and detectable from the upper surface side of the laminate. The upper substrate detection target portion is, for example, a marker.

The marker unit of the present invention may include the detection reference portion and the marker as the lower substrate detection target portion and may further include the marker as the upper substrate detection target portion, for example. Also, the marker unit of the present invention may include either of the detection reference portion and the marker as the lower substrate detection target portion and may further include the marker as the upper substrate detection target portion, for example.

The marker of the lower substrate detection target portion and the marker of the upper substrate detection target portion are not particularly limited, and may be, for example, the above-described VMP marker (RAS marker), a two-dimensional pattern code, or the like. Examples of the two-dimensional pattern code include an AR marker and a QR marker. Examples of the AR marker include an ARToolKit, an ARTag, a CyberCode, and an ARToolKitPlus. In the marker unit of the present invention, the position and the number of the markers are not particularly limited. Each of the drawings for the above-mentioned embodiments shows an example in which the detection reference portion and the marker are provided as the lower substrate detection target portion, the marker is a VMP marker, and the marker is installed between the detection reference portions provided at four corners of the VMP marker.

In the marker unit of the present invention, the method for forming the marker is not particularly limited. The marker, which is the lower substrate detection target portion, can be formed, for example, as follows. That is, in a desired region of the marker unit of the present invention, for example, valley-shaped and peak-shaped irregularities are formed on the upper surface of the lower substrate, whereby the desired region can serve as the marker.

The marker, which is the upper substrate detection target portion, can be formed, for example, as follows. That is, in a desired region of the marker unit of the present invention, for example, a lens structure such as a lenticular lens is formed on the upper surface side of the upper substrate, and a pattern such as a stripe pattern or a dot pattern is formed on the lower surface side of the upper substrate, whereby the desired region can serve as the marker.

The marker as the upper substrate detection target portion is described below in detail with reference to a VMP marker.

The marker includes a lens main body having a plurality of lens units, and the plurality of lens units are arranged continuously in the planar direction. A direction in which the lens units are arranged is referred to as an arrangement direction or a width direction, and a direction perpendicular to the arrangement direction in the planar direction is referred to as a length direction.

The lens unit in the lens main body may be, for example, a cylindrical lens. The lens main body is, for example, a light-transmitting member. The light-transmitting member is not particularly limited, and may be formed of a resin, glass, or the like, for example. Examples of the resin include polycarbonate, acrylic resin (e.g., polymethyl methacrylate (PMMA)), cycloolefin polymer (COP), and cycloolefin copolymer (COC).

The lens main body includes a light-condensing portion having a function of condensing light on one surface side and a plurality of pattern forming sections on the other surface side. The pattern forming sections are, for example, lines that extend along the length direction of the lens main body, and a stripe pattern is formed by a plurality of lines or a dot pattern is formed by a plurality of dots on the other surface side of the lens main body. The plurality of pattern forming sections are projected on the upper surface side of the lens main body as an optically detectable image and can be optically detected, for example.

The pattern forming section needs only to be optically detectable, and may be a colored film, for example. The color of the colored film is not particularly limited, and may be black, for example. The colored film may be, for example, a coating film, and can be formed of a coating material. The coating material is not particularly limited, and may be a liquid coating material or a powder coating material, for example. The coating film can be formed by coating and/or solidifying the coating material, for example. The coating method may be, for example, spray coating, screen printing, or the like. The solidifying method may be, for example, drying of the liquid coating material, curing of a curable component (e.g., a radical polymerizable compound or the like) in the coating material, baking of the powder coating material, or the like.

The pattern formed by the pattern forming sections is by no means limited. For example, when the pattern is the above-described stripe pattern, the density of the color forming the stripe pattern may be uniform, or the stripe pattern may have color gradations, for example.

When the marker is placed on, for example, a white object, among light rays that have entered from the upper surface of the lens main body of the marker, the light rays that have reached the pattern forming sections are absorbed by the pattern forming sections (e.g., black colored films), and the other light rays pass through the lens main body and are reflected from the surface of the object. Accordingly, on the upper surface of the lens main body, images of the pattern forming sections (e.g., black lines) are projected onto a white background. Thus, in the marker unit, the interposed substrate on which the upper substrate having the marker is laminated functions as a reflector, and therefore, for example, when the pattern forming section of the marker is formed in black, it is preferable that the upper surface of the interposed substrate positioned below the marker be white.

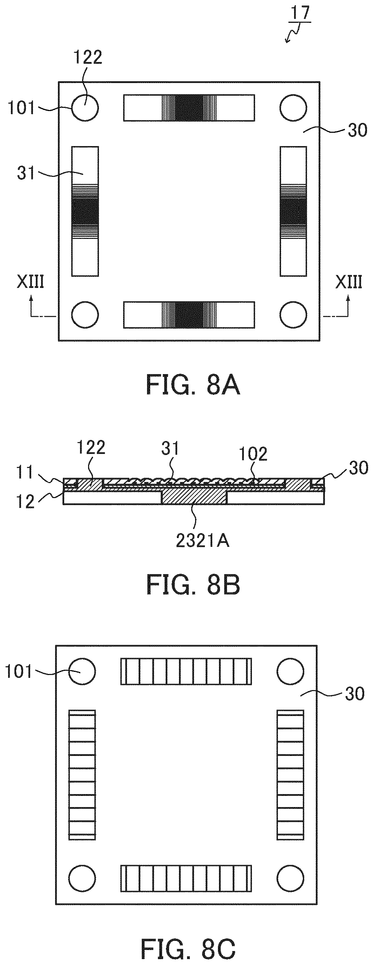

FIGs. 8A to 8C each shows an exemplary marker unit of the present embodiment in which the marker as the upper substrate detection target portion is provided. FIG. 8A is a top view of a marker unit 17, FIG. 8B is a cross-sectional view taken along the line XIII-XIII, and

FIG. 8C is a top view of the upper substrate 30 of the marker unit 17. In the marker unit 17, a lower substrate 12 has detection reference portions 122 as the lower substrate detection target portions on the upper surface side and the same protrusion 2321A as shown in FIG. 1A to 1C (positioning portions Q1 to Q4) on the lower surface side. In the marker unit 17, an upper substrate 30 has a region to be the above-described lens body, and the region serves as the marker 31 as the upper substrate detection target portion. The marker unit of the present embodiment is the same as that of the first embodiment shown in FIG. 2A except that the marker unit includes the upper substrate detection target portion instead of the marker as the lower substrate detection target portion. In addition, the marker unit of the present embodiment may be the same as those of the above-described embodiments except that the marker unit includes the upper substrate detection target portion instead of the marker as the lower substrate detection target portion.

### [Variation 2]

The marker unit of the present invention may include, for example, a laminate (e.g., a three-layer structure) in which the upper substrate is laminated on the lower substrate via an interposed substrate as described above or a laminate (e.g., a two-layer structure) in which the upper substrate is laminated on the lower substrate without involving the interposed substrate. When the marker unit of the present invention has the two-layer laminated structure, the structure is the same as those of the marker units of the aforementioned embodiments except that the marker unit does not include the interposed substrate.

In the case of the two-layer structure laminate, for example, the upper substrate has through holes, and regions of the upper surface of the lower substrate corresponding to the through holes of the upper substrate (i.e., regions of the upper surface of the lower substrate exposed through the through holes) serve as the lower substrate detection target portions. In the case of the three-layer laminate, for example, the interposed substrate also has through holes at positions corresponding to the through holes of the upper substrate, and regions of the upper surface of the lower substrate exposed through the through holes of the upper substrate and the through holes of the interposed substrate serve as the lower substrate detection target portions.

The upper surface of the lower substrate may be a flat surface or may have upper surface side protrusions protruding upward, for example. In this case, the upper surface side protrusions of the lower substrate are provided at positions corresponding to the through holes of the upper substrate and the through holes of the interposed substrate, and in the laminate, the upper surface side protrusions are inserted into the through holes. The upper surface of each of the upper surface side protrusions of the lower substrate serves as the detection reference portion which is the lower substrate detection target portion. The upper surface of the upper surface side protrusion of the lower substrate may be, for example, flat with the upper surface of the upper substrate (no step therebetween), higher (protruding) than the upper surface of the upper substrate, or lower than the upper surface of the upper substrate.

When the lower substrate has the upper surface side protrusion serving as the detection reference portion, it is preferable that the upper surface side protrusion of the lower substrate, the through hole of the upper substrate, and the through hole of the interposed substrate have substantially the same shape, and that the plane area of the former and the hole area of the latter are substantially the same.

The shape of the detection reference portion of the lower substrate may be, for example, a circular shape, a polygonal shape, or the like. Examples of the circular shape include a perfect circle and an ellipse, and a perfect circle is preferable. The polygonal shape may be, for example, a polygon such as a triangle or a quadrilateral, and examples of the quadrilateral include a square and a rectangle. The shapes of the through holes of the upper substrate and the interposed substrate are not particularly limited, and may be, for example, a circular shape, a polygonal shape, or the like.

In the case where the marker unit of the present invention is a two-layer structure marker unit, the combination of the colors of the lower substrate and the upper substrate is not particularly limited, and can be, for example, any combination as long as the lower substrate detection target portion and the upper substrate detection target portion (optional) can be detected. The combination of the colors of the lower substrate and the upper substrate may be, for example, as follows. The lower substrate has, for example, a black upper surface, and the upper substrate is, for example, transparent or white.

In the case where the marker unit of the present invention is a three-layer structure marker unit, the combination of the colors of the lower substrate, the interposed substrate, and the upper substrate is not particularly limited, and can be, for example, any combination as long as the lower substrate detection target portion and the upper substrate detection target portion (optional) can be detected. The colors of the lower substrate and the upper substrate are, for example, the same as those described above. The color of the interposed substrate can be appropriately set in accordance with, for example, the upper substrate, the lower substrate, the marker, and the like. The color of the upper surface of the interposed substrate is, for example, a color different from the color of the lower substrate detection target portion and the upper substrate detection target portion. Furthermore, it is preferable that the combination of the color of the upper surface of the interposed substrate, the color of the lower substrate detection target portion, and the color of the upper substrate detection target portion be, for example, a combination that easily provides the contrast. In this manner, by providing contrast for the interposed substrate, for example, the detection accuracy of the lower substrate detection target portion and the upper substrate detection target portion can be further improved, for example.

The combinations of the colors of the lower substrate, the interposed substrate, and the upper substrate may be, for example, as follows. The lower substrate has, for example, a black upper surface, the interposed substrate has, for example, a white upper surface, and the upper substrate is, for example, transparent. The interposed substrate may be also referred to as, for example, a reflective substrate with respect to the lower substrate detection target portion and the upper substrate detection target portion.

The lower substrate, the interposed substrate, and the upper substrate are, for example, resin substrates. Examples of the molding resin for the resin substrate include polycarbonate (PC), acrylic resin (e.g., polymethyl methacrylate (PMMA)), cycloolefin polymer (COP), and cycloolefin copolymer (COC). In the case of coloring the resin substrate, for example, a desired colored resin obtained by adding a coloring agent (e.g., masterbatch, dry color, or the like) of an intended color to the resin can be used as a molding material.

While the present invention has been described above with reference to illustrative embodiments, the present invention is by no means limited thereto. Various changes and variations that may become apparent to those skilled in the art may be made in the configuration and specifics of the present invention without departing from the scope of the present invention.

This application claims priority from Japanese Patent Application No. 2017-148306 filed on July 31, 2017. The entire subject matter of the Japanese Patent Application is incorporated herein by reference.

### Industrial Applicability

As described above, since the marker unit of the present invention has the positioning portion as described above, the marker unit can be easily positioned and installed in an installation target object such as a robot by visual recognition from the side. In addition, since the positioning portion is visually unrecognizable from the upper surface direction of the laminate, for example, the positioning portion can be prevented from causing noises when detecting the lower substrate detection target portion, and as a result, the detection accuracy can be prevented from being lowered. Therefore, according to the marker unit of the present invention, for example, calibration for the measurement of the detection reference portion, the marker, or the like in the marker unit can be omitted every time a marker unit is installed in the installation target object.

### Reference Signs List

- 1, 17, 21, 23, 24:: marker unit
- 10:: upper substrate
- 11:: interposed substrate
- 12:: lower substrate
- 20:: marker
- 2121, 2321, 2421:: positioning portion
- 122:: detection reference portion

## Claims

1. A marker unit compri sing:
an upper substrate; and
a lower substrate, wherein
the upper substrate is laminated on the lower substrate to form a laminate,
the lower substrate has a lower substrate detection target portion exposed to an upper surface side of the laminate on an upper surface thereof,
the lower substrate has at least two positioning portions on a lower surface thereof,
the lower substrate detection target portion is detectable from an upper surface side of the laminate, and
each positioning portion is visually recognizable from a side surface direction of the laminate and is visually unrecognizable from the upper surface direction of the laminate.

2. The marker unit according to claim 1, wherein
the lower substrate detection target portion includes at least one of a marker or a detection reference portion serving as a reference in detecting the marker.

3. The marker unit according to claim 1 or 2, wherein
the upper substrate has an upper substrate detection target portion detectable from the upper surface side of the laminate, and
the upper substrate detection target portion serves as a marker.

4. The marker unit according to any one of claims 1 to 3, wherein
the lower substrate has a protrusion protruding downward, and
the protrusion serves as the positioning portion.

5. The marker unit according to any one of claims 1 to 4, wherein
the lower substrate has a notch on a side surface thereof, and
the notch serves as the positioning portion.

6. The marker unit according to any one of claims 1 to 5, wherein
the positioning portion of the lower substrate includes at least two positioning portions in a positional relationship of not facing each other.

7. The marker unit according to any one of claims 1 to 6, wherein
the lower substrate has at least three positioning portions.

8. The marker unit according to any one of claims 1 to 7, wherein
when the laminate is installed in an installation target object, each positioning portion is disposed on the lower substrate at a position corresponding to an alignment mark with the marker unit in the installation target object by visually recognizing from the side surface direction of the laminate, and
the alignment mark with the marker unit in the installation target object is a mark of two lines intersecting each other.

9. The marker unit according to claim 8, wherein
the two lines intersecting each other form a cross consisting of two lines orthogonal to each other.

10. The marker unit according to claim 8 or 9, wherein
assuming two lines intersecting each other with a central axis of the laminate as an intersection, the lower substrate has the positioning portions at least at two of four points where edge regions thereof and the two lines intersect.

11. The marker unit according to any one of claims 2 to 10, wherein
the upper substrate has a through hole, and
the lower substrate has the detection reference portion on the upper surface thereof at a position corresponding to the through hole of the upper substrate.

12. The marker unit according to claim 11, wherein
the lower substrate has a protrusion on the upper surface thereof at a position corresponding to the through hole of the upper substrate, and
an upper surface of the protrusion serves as the detection reference portion.
